**Europäisches Patentamt**

**European Patent Office**

**Office européen des brevets**

(11) Veröffentlichungsnummer: **0 021 308**
**A1**

(12) **EUROPÄISCHE PATENTANMELDUNG**

(21) Anmeldenummer: **80103351.5**

(22) Anmeldetag: **16.06.80**

(51) Int. Cl.³: **G 09 F 13/00**, G 02 F 1/133

(30) Priorität: **29.06.79 DE 2926341**

(43) Veröffentlichungstag der Anmeldung: **07.01.81**
**Patentblatt 81/1**

(84) Benannte Vertragsstaaten: **CH FR GB IT LI NL**

(71) Anmelder: **SIEMENS AKTIENGESELLSCHAFT Berlin und München, Postfach 22 02 61, D-8000 München 22 (DE)**

(72) Erfinder: **Krüger, Hans, Dipl.-Phys, Peralohstrasse 13, D-8000 München 83 (DE)**
Erfinder: **Walter, Karl-Heinz, Dipl.-Ing., Herzog-Heinrich-Strasse 13, D-8018 Grafing (DE)**

(54) **Anordnung zur Helligkeitsverstärkung von passiven Anzeigevorrichtungen.**

㊷  Bisher werden zur Helligkeitsverstärkung von passiven Anzeigevorrichtungen Fluoreszenzplatten verwendet, die zum Einfangen, Führen und gebündelten Auskoppeln von Licht dienen. Eine Erweiterung der konstruktiven Gestaltungsmöglichkeiten der Anzeigevorrichtung lässt sich erreichen, indem der zum Einfangen und Führen bestimmte Teil der Anzeige wenigstens teilweise aus mindestens einer flexiblen, fluoreszierenden Folie (1, 5) besteht. Diese ist lichtleitend mit einer die Auskoppelfenster tragenden Kunststoffplatte (2) verbunden.

SIEMENS AKTIENGESELLSCHAFT          Unser Zeichen
Berlin und München                  VPA 79 P 1 1 1 2 EUR

Anordnung zur Helligkeitsverstärkung von passiven
Anzeigevorrichtungen

Die Anmeldung bezieht sich auf eine Anordnung zum Einfangen, Führen oder gebündelten Auskoppeln von Licht, mit einem zum Einfangen des Lichtes bestimmten, Fluoreszenzstoffe enthaltenden Kunststoffkörper.

Eine solche Anordnung ist bereits beschrieben worden. Sie dient zur Helligkeitsverstärkung einer passiven Anzeigevorrichtung, zum Beispiel einer Flüssigkristallanzeige. Der Kunststoffkörper ist als Platte ausgebildet. Diese Platte fängt zum Beispiel das Umgebungslicht ein, setzt es in Fluoreszenzlicht um und führt es zu Auskoppelfenstern, die in der Oberfläche in Form von Anzeigesegmenten angeordnet sind. Die Anzeigesegmente können durch Kerben, aufgedruckte Pigmentschichten oder Aufrauhungen gebildet sein.

Hab 1 Dx / 27.06.1979

Eine solche Platte ist im wesentlichen starr und muß für den speziellen Anwendungsfall gestaltet sein. Sie ist außerdem in einer einzigen Fluoreszenzfarbe eingefärbt.

Es ist jedoch oft erwünscht, eine passive Anzeige mit einfachen konstruktiven Mitteln verschiedene Gestaltung und/oder Farbe zu geben, ohne die die Auskoppelfenster tragende Anzeigevorrichtung (Display) ändern zu müssen.

Der Erfindung liegt die Aufgabe zugrunde, eine Anordnung der eingangs erwähnten Art so auszubilden, daß der zum Einfangen und/oder Führen bestimmte Teil der Anordnung auf einfache Weise auf den jeweiligen Verwendungszweck abgestimmt werden kann.

Die Erfindung ist dadurch gekennzeichnet, daß der Kunststoffkörper aus mindestens einer flexiblen Folie und einer damit * verbundenen Lichtleitplatte größerer Dicke als die Folie besteht.

Weiterbildungen der Erfindung sind Gegenstand der Unteransprüche.

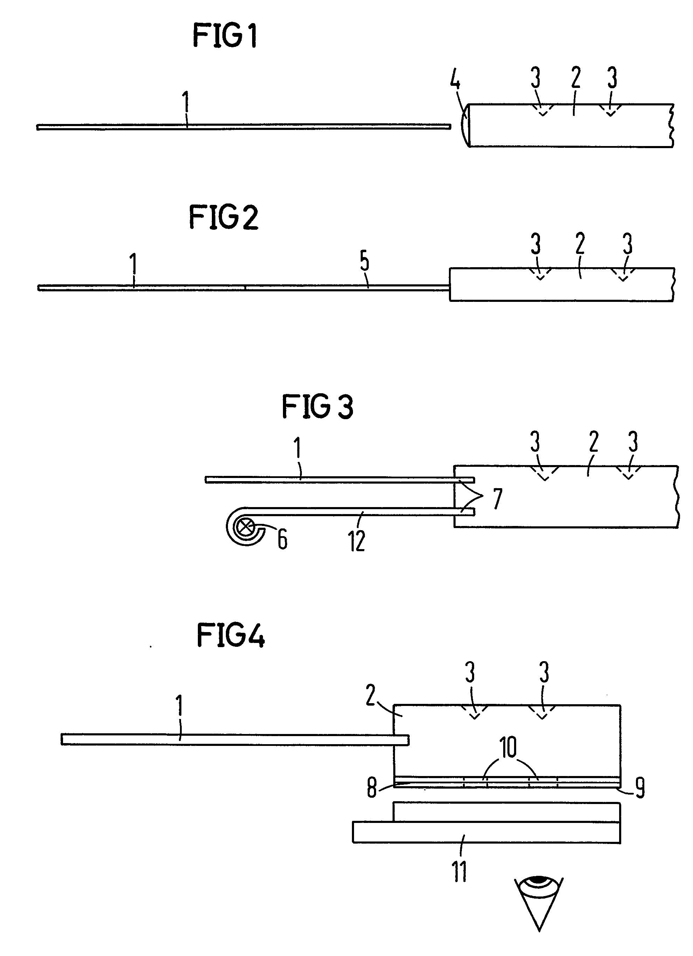

Die Erfindung wird an Hand von Ausführungsbeispielen in Verbindung mit den Fig. 1 bis 4 näher erläutert:

In Fig. 1 ist ein erstes Ausführungsbeispiel einer Anzeigevorrichtung dargestellt. Sie besteht aus einer flexiblen, mit Fluoreszenzstoff dotierten Kunststoffolie 1, die lichtleitend mit einer Kunststoffplatte 2 verbunden ist. Die lichtleitende Verbindung zwischen der fluoreszierenden Folie 1 und der Lichtleitplatte 2 kann zum Beispiel durch eine der Stirnseite der Folie 1 gegenüberliegende Linse 4 erreicht werden. Der Abstand Linse - Folie 1 ist so gewählt, daß der Brennpunkt der

* lichtleitend

Linse in der Folie liegt. Diese Anordnung kann jedoch auch so abgewandelt werden, daß die flexible Folie 1 mit einer Stirnseite stumpf an eine Stirnseite der Lichtleitplatte 2 stößt und dort lichtleitend mit ihr verklebt ist. In der Lichtleitplatte 2, die aus transparentem Kunststoff oder mit Fluoreszenzstoffen dotiert sein kann, sind auf der vom Betrachter abgewandten Seite Kerben 3 angebracht, die die Auskoppelfenster für die auszukoppelnde Information darstellen.

Die Anordnung nach Fig. 2 unterscheidet sich von der nach Fig. 1 im wesentlichen durch die Verwendung zweier miteinander lichtleitend verbundener flexibler Folien. Davon kann die Folie 1 mit Fluoreszenzstoffen dotiert sein, während die Folie 5 transparent sein kann und nur die Funktion eines Lichtleiters hat. Die Folie 5 kann jedoch auch derart mit Fluoreszenzstoffen dotiert sein, daß die Folien 1 und 5 Licht verschiedener Wellenlänge absorbieren. Die Fluoreszenzstoffe sind außerdem zweckmäßigerweise so ausgewählt, daß das emittierte Licht der Folie 1 nicht von den Fluoreszenzstoffen der Folie 5 absorbiert wird. Die Fluoreszenzstoffe in den Folien 1 und 5 können beispielsweise auf Tageslicht beziehungsweise Kunstlicht abgestimmt sein.

Eine andere Art der lichtleitenden Ankopplung der fluoreszierenden, flexiblen Folie 1 an die Lichtleitplatte 2 kann beispielsweise durch eine in der Stirnseite der Lichtleitplatte 2 angebrachte Kerbe 7 erfolgen, in die ein stirnseitiges Ende der Folie 1 eingesteckt ist. Entsprechend Fig. 2 könnte auch ein stirnseitiges Ende der Folie 5 über eine Kerbe 7 mit der Lichtleitplatte 2 verbunden sein. Eine andere Möglichkeit besteht darin, zum Beispiel zwei Kerben 7 in der Stirnseite der Lichtleitplatte vorzusehen, in denen die stirnseitigen Enden der Folie 1 beziehungsweise einer Folie 12 stecken. Die Folie 1 kann beispielsweise wieder auf Tageslicht abgestimmt sein, während die Fluoreszenzstoffe der Folie 12 auf das Spektrum eines Lämpchens 6 abgestimmt sind. Um einen möglichst großen Teil des Lichtes des Lämpchens 6 aufzufangen, kann die flexible Folie 12 wenigstens teilweise um das Lämpchen herumgewickelt werden.

Die beschriebene passive Anzeigevorrichtung nach den Fig. 1 bis 3 kann zum Beispiel in Verbindung mit einer Flüssigkristallanzeige 11 verwendet werden, wie dies in Fig. 4 dargestellt ist. Diese Flüssigkristallanzeige kann beispielsweise eine Schadt-Helfrich-Anzeige der bekannten Art sein. Zur Erhöhung des Kontrastes kann die Lichtleitplatte 2 an ihrer dem Betrachter zugewandten Seite außerhalb der Kerben 3 mit einer Verspiegelung 8 und mit einer schwarzen Schicht 9 versehen sein. In der Verspiegelung 8 und der schwarzen Schicht 9 sind den Kerben 3 gegenüberliegend transparente Fenster 10 angeordnet.

Die Verwendung transparenter und/oder fluoreszierender flexibler Folien gestattet einen flexiblen Aufbau der Anzeigevorrichtung, da in allen Fällen wenigstens das zum Einfangen von Licht bestimmte Teil der Anzeige eine Folie ist, die leicht verformt und verschiedenen Anwendungszwecken angepaßt werden kann. In den Fällen der Ausführungsbeispiele nach Fig. 3 und 4 können die Folien außerdem leicht gegen solche mit anderer Emissionswellenlänge, das heißt mit anderer Farbe, ausgewechselt werden.

10 Patentansprüche
4 Figuren

Patentansprüche

1. Anordnung zum Einfangen, Führen oder gebündelten Auskoppeln von Licht, mit einem zum Einfangen des Lichtes bestimmten, Fluoreszenzstoffe enthaltenden Kunststoffkörper, d a d u r c h g e k e n n z e i c h n e t , daß der Kunststoffkörper aus mindestens einer flexiblen Folie (1, 5, 12) und einer damit lichtleitend verbundenen Lichtleitplatte (2) größerer Dicke als die Folie besteht.

2. Anordnung nach Anspruch 1, d a d u r c h g e - k e n n z e i c h n e t , daß die flexible Folie (1, 5) mit einer ihrer Stirnflächen stumpf an eine der Stirnflächen der Lichtleitplatte (2) anstößt.

3. Anordnung nach Anspruch 1, d a d u r c h g e - k e n n z e i c h n e t , daß die Lichtleitplatte (2) mit der flexiblen Folie (1) über eine an der Stirnseite der Lichtleitplatte (2) angeordnete Linse (4) lichtleitend verbunden ist.

4. Anordnung nach Anspruch 1, d a d u r c h g e - k e n n z e i c h n e t , daß die flexible Folie (1, 12) mit einem Ende in einem in einer der Stirnflächen der Lichtleitplatte (2) angebrachten Schlitz (7) sitzt.

5. Anordnung nach einem der Ansprüche 1 bis 4, g e - k e n n z e i c h n e t  d u r c h  eine zwischen Folie (1) und Lichtleitplatte (2) lichtleitend eingefügte zweite Folie (5).

6. Anordnung nach Anspruch 5, d a d u r c h g e - k e n n z e i c h n e t , daß die zweite Folie (5) transparent ist.

7. Anordnung nach Anspruch 5, d a d u r c h   g e -
k e n n z e i c h n e t ,   daß die zweite Folie (5)
Fluoreszenzstoffe enthält, die Licht einer anderen Wellenlänge als die Fluoreszenzstoffe der erstgenannten
Folie (1) absorbieren.

8. Anordnung nach Anspruch 1, d a d u r c h   g e -
k e n n z e i c h n e t ,   daß mit der Lichtleitplatte
(2) mindestens eine weitere, Fluoreszenzstoffe enthaltende Folie (12) lichtleitend verbunden ist, die Fluoreszenzstoffe enthält, die Licht einer anderen Wellenlänge als die erstgenannte Folie (1) absorbieren.

9. Anordnung nach einem der Ansprüche 1 bis 8, d a -
d u r c h   g e k e n n z e i c h n e t ,   daß die
Lichtleitplatte (2) transparent ist.

10. Anordnung nach einem der Ansprüche 1 bis 8, d a -
d u r c h   g e k e n n z e i c h n e t ,   daß die
Lichtleitplatte (2) Fluoreszenzstoffe enthält.

## Zusammenfassung

Anordnung zur Helligkeitsverstärkung von passiven
Anzeigevorrichtungen

Bisher werden zur Helligkeitsverstärkung von passiven
Anzeigevorrichtungen Fluoreszenzplatten verwendet, die
zum Einfangen, Führen und gebündelten Auskoppeln von
Licht dienen. Eine Erweiterung der konstruktiven Gestaltungsmöglichkeiten der Anzeigevorrichtung läßt sich
erreichen, indem der zum Einfangen und Führen bestimmte
Teil der Anzeige wenigstens teilweise aus mindestens
einer flexiblen, fluoreszierenden Folie (1, 5, 12) besteht. Diese ist lichtleitend mit einer die Auskoppelfenster tragenden Kunststoffplatte (2) verbunden
(Fig. 2).

FIG 1

FIG 2

FIG 3

FIG 4

| Europäisches Patentamt | **EUROPÄISCHER RECHERCHENBERICHT** | 0021308 Nummer der Anmeldung |
|---|---|---|
| | | EP 80 10 3351.5 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| A | DE – A1 – 2 724 748 (SIEMENS AG) <br> * Anspruch 28 * <br><br> -- | 1,2 | G 09 F 13/00 <br> G 02 F 1/133 |
| A | US – A – 3 966 303 (M. YAMAMOTO) <br> * Ansprüche * <br><br> -- | | |
| A | DE – B2 – 2 554 226 (SIEMENS AG) <br> * ganzes Dokument * <br><br> -- | | **RECHERCHIERTE SACHGEBIETE (Int. Cl.3)** <br><br> G 02 F 1/133 <br> G 09 F 13/00 |
| A | US – A – 3 994 564 (B. SOMOGYI) <br> * ganzes Dokument * <br><br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 06-10-1980 | FUCHS |

EPA form 1503.1 06.78